# EUROPEAN PATENT SPECIFICATION

(11) **EP 3 865 434 B1**
(45) Date of publication and mention of the grant of the patent: **09.08.2023**
(21) Application number: 20838866.0
(22) Date of filing: 22.07.2020
(51) Int. Cl.: B65H 19/10, B65H 19/18, B65H 19/20, B65H 35/07, B65H 37/04, H01M 10/04, B65H 23/182, B65H 23/185

(54) **CONTINUOUS TAPE-FEEDING APPARATUS AND CONTINUOUS TAPE-FEEDING METHOD**
VORRICHTUNG UND VERFAHREN ZUR KONTINUIERLICHEN BANDZUFÜHRUNG
APPAREIL D'ALIMENTATION EN BANDE CONTINUE ET PROCÉDÉ D'ALIMENTATION EN BANDE CONTINUE

(30) Priority: 03.01.2020 KR 20200001000
(43) Date of publication of application: 18.08.2021
(73) Proprietor: Sejong Technology Co.,Ltd, Chungcheongnam-do 31418 (KR)
(72) Inventor: LEE, Yoon-Bae, Cheonan-si Chungcheongnam-do 31197 (KR); RUE, In-Bin, Cheonan-si Chungcheongnam-do 31092 (KR); KANG, Yu-Ha, Cheonan-si Chungcheongnam-do 31085 (KR); SEO, Kyung-Yong, Cheonan-si Chungcheongnam-do 31110 (KR); KIM, Jin-Saeng, Cheonan-si Chungcheongnam-do 31085 (KR)
(74) Representative: Grünecker Patent- und Rechtsanwälte PartG mbB
(86) International application number: PCT/KR2020/009622
(87) International publication number: WO 2021/137378

(56) References cited:
- EP-A1- 2 845 827
- JP-A- 2007 165 268
- KR-A- 20160 133 264
- KR-B1- 101 398 972
- KR-B1- 101 927 913
- KR-B1- 102 120 098
- US-A- 3 886 031

## Description

### [Technical Field]

The present disclosure relates to a tape continuous feeding apparatus and a tape continuous feeding method in a process of attaching an insulation tape (hereinafter, a "tape") to an outside of a battery for an electric car, which provide one pair of tape feeding roll portions including a first tape feeding roll portion and a second tape feeding roll portion having the tape wound therearound in a roll type, and automatically and continuously feed the tape wound around the one pair of tape feeding roll portions. More particularly, the present disclosure relates to an apparatus which continuously feeds a tape by using a tape replacement portion, the tape replacement portion automatically replacing a tape wound around the first or second tape feeding roll portion with a tape wound around the other tape feeding roll portion standing by to feed, before feeding of the tape is completed and the tape is completely exhausted, wherein the tape replacement portion includes: two adsorption pads which are spaced apart from each other by a predetermined gap on each of an upper portion and a lower portion to fix both sides of the tape before or after the tape is cut when the tape is replaced; a tape cutting cutter which advances in a direction orthogonal to the adsorption pads to cut the tape fixed by the two adsorption pads provided in each of the upper and lower portions, and cuts the tape; one pair of upper and lower connection tape adsorption blocks which have a connection tape adsorbed onto a surface thereof to connect the tape; and a feeding standby tape fixing portion which fixes an end of the tape of the tape feeding roll portion standing by to feed the tape out of the first or second tape feeding roll portions, wherein the one pair of upper and lower connection tape adsorption blocks come into contact with cutting upper and lower surfaces of the feeding roll portion tape wound around the other tape feeding roll portion, and of a connection feeding tape, out of the tapes cut by the tape cutting cutter, and the feeding roll portion tape wound around the other tape feeding roll portion, and the connection feeding tape are connected to each other on their upper and lower surfaces by the connection tapes, and the feeding roll portion tape wound around the other tape feeding roll portion is fed. Accordingly, the tape continuous feeding apparatus and the tape continuous feeding method can feed the tape smoothly and can reduce time required to replace the tape, and can reduce an error on a tape connection portion when the tape of the tape feeding roll portion is replaced.

### [Background Art]

In general, in a manufacturing line of battery cells for electric cars, after an operation of welding an electrode installed in a battery is finished, a process of attaching an insulation tape to an outside of the battery cell is performed before a battery cell case is assembled. Since the battery for the electric car should have a high capacity, the battery is configured with multiple battery cells collected in the form of a module. The battery cells should be insulated from one another in order to configure the battery in the form of a module, and it is necessary to attach an insulation tape to outsides of the battery cells to insulate between the battery cells, and also, when the insulation tape is attached, the tape should be uniformly and exactly attached to corners of the battery.

To feed such a tape, one pair of tape feeding roll portions including a first tape feeding roll portion and a second tape feeding roll portion, around which the tape is wound in a roll type, is provided, and one tape feeding roll portion feeds the tape to a tape attachment device, and the other tape feeding roll portion stands by to feed the tape for preliminary use. That is, when feeding of the tape wound around one tape feeding roll portion is completed and the tape is completely exhausted, a tape wound around the other tape feeding roll portion is manually connected and fed. In this case, the tape is not smoothly fed and time required to replace the tape increases, and thus productivity is reduced, and there is a problem that an error occurs at a tape connection portion when the tape is manually replaced on the tape feeding roll portion. The above-described technology, which provides one pair of tape feeding roll portions including the first tape feeding roll portion and the second tape feeding roll portion around which the tape is wound in the roll type, and feeds the tape to the tape attachment device from one tape feeding roll portion and feeds the tape from the other tape feeding roll portion for preliminary use, is disclosed in Korean Patent Laid-Open Publication No. 10-2014-0107951 and Korean Patent Registration Publication No. 10-1582793. Other tape continuous feeding apparatuses and methods have been disclosed by EP 2 845 827 A1 and US 4,120,739 A.

### [Detailed Description of the Present disclosure]

### [Technical Objects]

The present disclosure has been researched and developed to solve the above-described problems of the related-art technology, and an object of the present disclosure is to provide a tape continuous feeding apparatus and a tape continuous feeding method in a process of attaching a tape to an outside of a battery for an electric car, which provide one pair of tape feeding roll portions including a first tape feeding roll portion and a second tape feeding roll portion having the tape wound therearound in a roll type, and automatically and continuously feed the tape wound around the one pair of tape feeding roll portions. Specifically, in the apparatus continuously feeding a tape by using a tape replacement portion which automatically replaces a tape wound around the first or second tape feeding roll portion with a tape wound around the other tape feeding roll portion standing by to feed, before feeding of the tape is completed and the tape is completely exhausted, the tape replacement portion may include: two adsorption pads which are spaced apart from each other by a predetermined gap on each of an upper portion and a lower portion; a tape cutting cutter which advances in a direction orthogonal to the adsorption pads to cut the tape fixed by the two adsorption pads provided in each of the upper and lower portions, and cuts the tape; one pair of upper and lower connection tape adsorption blocks which have a connection tape adsorbed onto a surface thereof to connect the tape; and a feeding standby tape fixing portion which fixes an end of the tape of the tape feeding roll portion standing by to feed the tape out of the first or second tape feeding roll portions, and the one pair of upper and lower connection tape adsorption blocks come into contact with cutting upper and lower surfaces of the feeding roll portion tape wound around the other tape feeding roll portion, and of a connection feeding tape, out of the tapes cut by the tape cutting cutter, and the feeding roll portion tape wound around the other tape feeding roll portion, and the connection feeding tape are connected to each other on their upper and lower surfaces by the connection tapes, and the feeding roll portion tape wound around the other tape feeding roll portion is fed. That is, an object of the present disclosure is to provide a tape continuous feeding apparatus which can simplify a replacement operation by automating the tape replacement operation, can contribute to enhancement of productivity by reducing time required to replace the tape, and can reduce operator's fatigue.

In addition, another object of the present disclosure is to provide a tape continuous feeding method which can simplify a replacement operation by automating the tape replacement operation, can contribute to enhancement of productivity by reducing time required to replace the tape, and can reduce operator's fatigue.

### [Technical Solving Means]

According to the present disclosure to achieve the above-described objects, there is provided a tape continuous feeding apparatus which is provided with one pair of tape feeding roll portions including a first tape feeding roll portion and a second tape feeding roll portion which are disposed one on the other and around which a tape having release paper attached thereto is wound in a roll type, the apparatus continuously feeding a tape by using a tape replacement portion, the tape replacement portion automatically replacing a feeding roll portion tape wound around the first or second tape feeding roll portion with a feeding roll portion tape wound around the other tape feeding roll portion standing by to feed, before feeding of the tape is completed and the tape is completely exhausted, wherein the tape replacement portion includes: two adsorption pads which are spaced apart from each other by a predetermined gap on each of an upper portion and a lower portion to fix both sides of the tape before or after the tape is cut when the tape is replaced; a tape cutting cutter which advances in a direction orthogonal to a direction in which the adsorption pads are moved up and down to cut the tape fixed by the two adsorption pads provided in each of the upper and lower portions, and cuts the tape; one pair of upper and lower connection tape adsorption blocks which are disposed between adsorption pads of the two adsorption pads, and have a connection tape adsorbed onto a surface thereof to connect the tape; and a feeding standby tape fixing portion which fixes an end of the tape of the tape feeding roll portion standing by to feed the tape out of the first or second tape feeding roll portions, wherein the one pair of upper and lower connection tape adsorption blocks come into contact with cutting upper and lower surfaces of the feeding roll portion tape wound around the other tape feeding roll portion, and of a connection feeding tape, out of the tapes cut by the tape cutting cutter, and the feeding roll portion tape wound around the other tape feeding roll portion, and the connection feeding tape are connected to each other on their upper and lower surfaces by the connection tapes, simultaneously, and the feeding roll portion tape wound around the other tape feeding roll portion is fed.

In addition, the present disclosure is characterized in that the one pair of tape feeding roll portions have the first tape feeding roll portion and the second tape feeding roll portion disposed one on the other with a same structure, and that the tape feeding roll portion includes: a roll case which has one pair of circular plates spaced apart from each other by a gap and forms a space in the gap to accommodate the tape; a fixing spool which is installed in a center of the roll case to fix the case; a tape tension maintaining servomotor which is installed to maintain a tension of the tape; and a tape position alignment servomotor which is installed to align a position of the tape.

In addition, according to the present disclosure, there is provided a tape continuous feeding method, which provides one pair of tape feeding roll portions including a first tape feeding roll portion and a second tape feeding roll portion which are disposed one on the other and around which a tape having release paper attached thereto is wound in a roll type, the method continuously feeding a tape by using a tape replacement portion, the tape replacement portion automatically replacing a feeding roll portion tape wound around the first or second tape feeding roll portion with a feeding roll portion tape wound around the other tape feeding roll portion standing by to feed, before feeding of the tape is completed and the tape is completely exhausted, the method including the steps of feeding the feeding roll portion tape by connecting any one of the first or second tape feeding roll portion to a connection feeding tape, and making the other tape feeding roll portion be in a tape feeding standby state by fixing an end of the feeding roll portion tape of the other tape feeding roll portion by a feeding standby tape fixing portion; when it is estimated that the wound feeding roll portion tape is exhausted while the tape is fed by the tape feeding roll portion, transmitting a tape replacement request signal to a controller; adsorbing and fixing the tape by bringing the feeding roll portion tape wound around the tape feeding roll portion the tape of which is to be exhausted, and the feeding roll portion tape wound around the other tape feeding roll portion into contact with each other by moving down and moving up two adsorption pads which are spaced apart from each other by a predetermined gap on each of an upper portion and a lower portion; cutting the tape by making a tape cutting cutter advance in a direction orthogonal to a direction in which the adsorption pads are moved up and down with the feeding roll portion tapes of the two tape feeding roll portions being in contact with each other; bringing cut parts of the tapes into contact with each other by moving down and moving up one pair of upper and lower connection tape adsorption blocks, which have connection tapes adsorbed onto surfaces thereof to connect the tape, and connecting the feeding roll portion tape wound around the other tape feeding roll portion, and the connection feeding tape on both upper and lower surfaces, simultaneously, by the one pair of connection tapes, the one pair of upper and lower connection tape adsorption blocks being disposed in the gap between the two adsorption pads; and feeding the tape by the feeding roll portion tape wound around the other tape feeding roll portion.

In addition, the present disclosure is characterized in that the method further includes the steps of: after cutting by the cutting cutter, fixing the tape by maintaining the two adsorption pads on each of the upper and lower portions in a vacuum state, and then releasing the adsorption pad close to the tape feeding roll portion out of the two upper adsorption pads, and the adsorption pad far from the tape feeding roll portion out of the two lower adsorption pads from the vacuum state, and removing a remaining tape from the tape feeding roll portion which has fed the tape and removing a leftover tape fixed to the feeding standby tape fixing portion; maintaining the two adsorption pads on each of the upper and lower portions in the vacuum state, adsorbing and fixing the tape by bringing the tapes of the first and second tape feeding roll portions by moving down and moving up the two adsorption pads which are spaced apart from each other by a predetermined gap on the upper portion and the lower portion, and moving down a second feeding standby tape fixing portion which fixes an end of the tape of the other tape feeding roll portion; and then connecting the cut tapes.

In addition, the present disclosure is characterized in that the method includes a step of, after releasing the two adsorption pads on each of the upper portion and the lower portion from the vacuum state and spacing the adsorption pads from the tape by moving up and moving down, and spacing the one pair of upper and lower connection tape adsorption blocks from the tape by moving up and moving down the connection tape adsorption blocks, feeding the tape by the feeding roll portion tape wound around the other tape feeding roll portion which is standing by.

### [Advantageous Effects]

In a tape continuous feeding apparatus and a tape continuous feeding method in a process of attaching a tape to an outside of a battery for an electric car, which provide one pair of tape feeding roll portions including a first tape feeding roll portion and a second tape feeding roll portion having the tape wound therearound in a roll type, and automatically and continuously feed the tape wound around the one pair of tape feeding roll portions, the tape continuous feeding apparatus continuously feeds a tape by using a tape replacement portion which automatically replaces a tape wound around the first or second tape feeding roll portion with a tape wound around the other tape feeding roll portion standing by to feed, before feeding of the tape is completed and the tape is completely exhausted, and the tape replacement portion includes: two adsorption pads which are spaced apart from each other by a predetermined gap on each of an upper portion and a lower portion; one pair of upper and lower connection tape adsorption blocks which are disposed between the two adsorption pads provided on the upper and lower portions, and have a connection tape adsorbed onto a surface thereof to connect the cut tape; and a tape cutting cutter which cuts the tape fixed by the adsorption pads, and also, the apparatus optimizes an installation space and can attach on both surfaces of a tape, and is applicable to a double-sided tape.

In addition, according to the present disclosure, a tape continuous feeding apparatus provides one pair of tape feeding roll portions including a first tape feeding roll portion and a second tape feeding roll portion which are disposed one on the other and around which a tape having release paper attached thereto is wound in a roll type, and continuously feeds a tape by automatically replacing a tape wound around the first or second tape feeding roll portion with a tape wound around the other tape feeding roll portion standing by to feed, before feeding of the tape is completed and the tape is completely exhausted, and a tape replacement portion includes: two adsorption pads which are spaced apart from each other by a predetermined gap on each of an upper portion and a lower portion to fix both sides of the tape before or after the tape is cut when the tape is replaced; a tape cutting cutter which advances in a direction orthogonal to a direction of the adsorption pads to cut the tape fixed by the two adsorption pads provided in each of the upper and lower portions, and cuts the tape; one pair of upper and lower connection tape adsorption blocks which have a connection tape adsorbed onto a surface thereof to connect the tape; and a feeding standby tape fixing portion which fixes an end of the tape of the tape feeding roll portion standing by to feed the tape out of the first or second tape feeding roll portions, and the one pair of upper and lower connection tape adsorption blocks come into contact with cutting upper and lower surfaces of the feeding roll portion tape wound around the other tape feeding roll portion, and of a connection feeding tape, out of the tapes cut by the tape cutting cutter, and the feeding roll portion tape wound around the other tape feeding roll portion, and the connection feeding tape are connected to each other on their upper and lower surfaces by the connection tapes, simultaneously, and the feeding roll portion tape wound around the other tape feeding roll portion is fed. Accordingly, there are effects of simplifying a replacement operation by automating the tape replacement operation, and contributing to enhancement of productivity by reducing time required to replace the tape, and also, the method optimizes an installation space and can attach on both surfaces of a tape, and is applicable to a double-sided tape.

### [Brief Description of the Drawings]

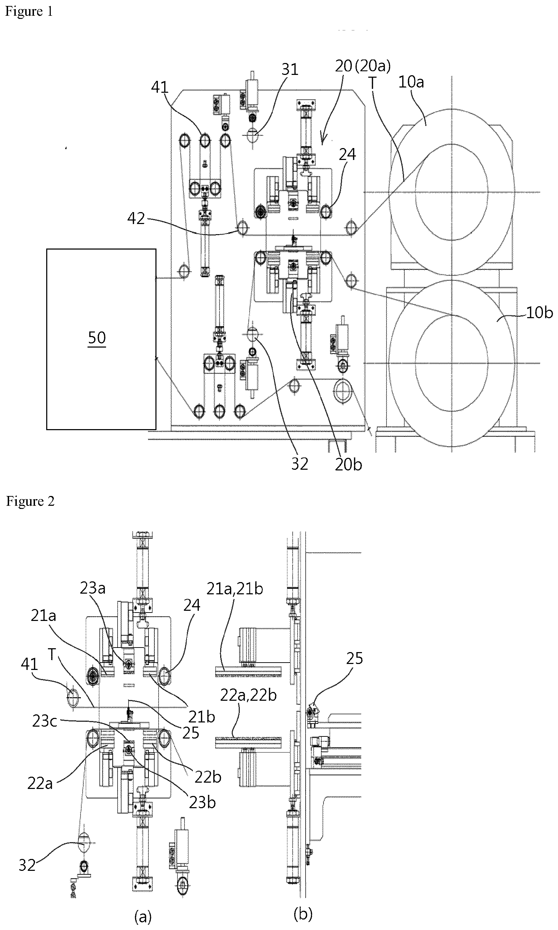

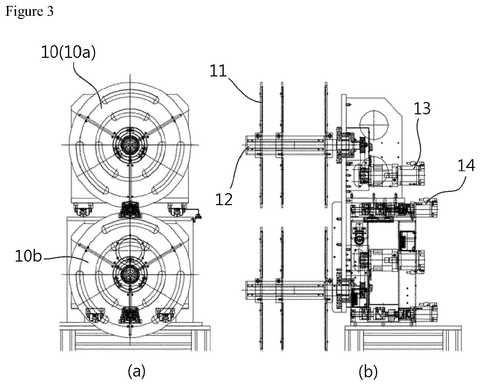

FIG. 1 is a front view of a tape continuous feeding apparatus according to the present disclosure;
View (a) of FIG. 2 is a front view of a tape replacement portion in the present disclosure, and view (b) of FIG. 2 is a side view of the tape replacement portion;
View (a) of FIG. 3 is a front view of a tape feeding roll portion in the present disclosure, and view (b) of FIG. 3 is a side view of the tape feeding roll portion;
FIG. 4 is a view to explain steps (a) to (c) for a tape continuous feeding method according to the present disclosure;
FIG. 5 is a view to explain steps (d) to (f) for the tape continuous feeding method according to the present disclosure; and
FIG. 6 is a view to explain steps (g) to (h) for the tape continuous feeding method according to the present disclosure.

### * *Explanation of Signs* *

T: tape T1: feeding roll portion tape
T2: connection feeding tape 10: tape feeding roll portion
10a: first tape feeding roll 10b: second tape feeding roll
11: roll case 12: tape fixing spool
13: tape tension maintaining servomotor 14: tape position alignment servomotor
20: tape replacement portion 21a: first upper adsorption pad
21b: second upper adsorption pad 22a: second lower adsorption pad
22c: second lower adsorption pad 23a: first connection tape adsorption block
23b: second connection tape adsorption block 23c: connection tape
24: guide roller 25: tape cutting cutter
31, 32: feeding standby tape fixing portion 41, 42: guide roller
50: tape attachment device

### [Best Mode for Embodying the Invention]

The present disclosure relates to a tape continuous feeding apparatus and a tape continuous feeding method in a process of attaching an insulation tape (hereinafter, a "tape") to an outside of a battery for an electric car, which provide one pair of tape feeding roll portions including a first tape feeding roll portion and a second tape feeding roll portion around which the tape is wound in a roll type, and which automatically and continuously feed the tape wound around the one pair of tape feeding roll portions. The present disclosure will be described in detail hereinbelow with reference to the accompanying drawings.

As shown in FIG. 1, the continuous feeding apparatus according to the present disclosure is provided with one pair of tape feeding roll portions including a first tape feeding roll portion 10a and a second tape feeding roll portion 10b around which a tape T is wound in a roll type and which are disposed one on the other, and continuously feeds the tape T to a tape attachment device 50, which is a separate device, from the tape feeding roll portion via guide rollers 24, 41, 42. For example, the apparatus continuously feeds the tape T to the tape attachment device 50, which is a separate device, by using a tape replacement portion 20. The tape replacement portion 20 automatically replaces a feeding roll portion tape T1 wound around the first tape feeding roll portion 10a with a feeding roll portion tape T1 wound around the other tape feeding roll portion [second tape feeding roll portion 10b] which stands by to feed, before feeding of the feeding roll portion tape T1 is completed and the tape is completely exhausted.

As shown in FIG. 2, the tape replacement portion 20 includes two adsorption pads 21a, 21b which are disposed on an upper portion and are spaced apart from each other by a predetermined gap to adsorb and fix the tape T, and two adsorption pads 22a, 22b which are disposed on a lower portion and are spaced apart from each other by a predetermined gap. When the upper adsorption pads 21a, 21b and the lower adsorption pads 22a, 22b are moved up or down, respectively, and come into contact with each other, their widths and lengths match each other and the tape T is adsorbed and securely fixed therebetween. When the upper adsorption pads 21a, 21b and the lower adsorption pads 22a, 22b are moved down and are moved up, respectively, and come into contact with each other, they can adsorb and securely fix the tape T therebetween. When the upper adsorption pads 21a, 21b and the lower adsorption pads 22a, 22b are moved down and are moved up, respectively, they are spaced apart from each other and the tape T is released. In addition, one pair of upper and lower connection tape adsorption blocks 23a, 23b are installed between the upper adsorption pads 21a, 21b and the lower adsorption pads 22a, 22b in the widthwise direction to connect the cut tape T to the connection feeding tape T2 and the feeding roll portion tape T1. A connection tape 23c is adsorbed onto a surface of each of the connection tape adsorption blocks 23a, 23b to connect the cut tape T on an upper portion and a lower portion. When the connection tape 23c is removed from the surface of the connection tape adsorption block 23a, 23b after connecting the cut tape T, the connection tape 23c may be adsorbed automatically or manually by an operator. A tape cutting cutter 25 may be installed behind the adsorption pads 21a, 21b, 22a, 22b, that is, behind a movement line of the tape T, to cut the tape T fixed by the adsorption pads 21a, 21b, 22a, 22b. Upon receiving a tape cutting signal, the tape cutting cutter 25 advances in a direction orthogonal to a direction in which the adsorption pads 21a, 21b, 22a, 22b are moved up and down, and cuts the tape T.

A second feeding standby tape fixing portion 32 is provided to fix an end of the tape of the tape feeding roll portion [for example, the second tape feeding roll portion 10b] which stands by to feed the tape, out of the first tape feeding roll portion 10a and the second tape feeding roll portion 10b, in the process of standing by to feed. A first feeding standby tape fixing portion 31 is also provided to fix an end of the tape of the first tape feeding roll portion 10a in the process of standing by to feed when the first tape feeding roll portion 10a is in a feeding standby state. The first feeding standby tape fixing portion 31 and the second feeding standby tape fixing portion 32 are formed in a cylindrical shape and have a slit formed thereon in a center direction, and fix the end of the tape T by inserting into in the slit and maintain a tension by rotating the cylindrical shape.

In addition, as shown in FIG. 3, the one pair of tape feeding roll portions 10a, 10b have the first tape feeding roll portion 10a and the second tape feeding roll portion 10b disposed one on the other with the same structure, and alternately feed the tape T to the tape attachment device 50, which is a separate device. The tape feeding roll portion 10a, 10b includes a roll case 11 which has one pair of circular plates disposed to have a gap therebetween, and forms a space in the gap to accommodate the tape T, a fixing spool 12 which is installed in a center of the roll case 11 to fix the roll case 11, a tape tension maintaining servomotor 13 which is installed to maintain the tension of the tape T, and a tape position alignment servomotor 14 which is installed to align the position of the tape T.

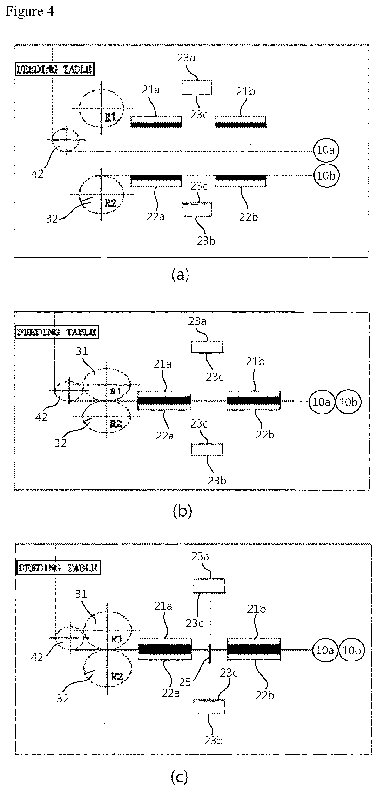

Hereinafter, the continuous feeding method according to the present disclosure will be described with reference to FIGS. 4 to 6.

The tape continuous feeding method according to the present disclosure provides the one pair of tape feeding roll portions having the first tape feeding roll portion 10a and the second tape feeding roll portion 10b around which the tape T is wound in a roll type and which are disposed one on the other, and continuously feeds the tape T by automatically replacing the tape with the tape T wound around the second tape feeding roll portion 10b, which is the other tape feeding roll portion standing by to feed the tape T, before feeding of the tape T wound around the first tape feeding roll portion 10a or the second tape feeding roll portion 10b [for example, the first tape feeding roll portion 10a] is completed and the tape is completely exhausted.

As shown in view (a) of FIG. 4, at an initial step of the tape continuous feeding method according to the present disclosure, the first tape feeding roll portion 10a feeds the tape T to the tape attachment device 50, which is a separate device, via the guide roller 42, and the second tape feeding roll portion 10b, which is the other tape feeding roll portion, is in a tape feeding standby state, such that the extended feeding roll portion tape T1 is adsorbed and fixed to the lower adsorption pads 22a, 22b and an end of the tape T is fixed by the second feeding standby tape fixing portion 32. If the second tape feeding roll portion 10b feeds the tape T to the tape attachment device 50 via the guide roller 42 and the first tape feeding roll portion 10a is in the standby state, the feeding roll portion tape T1 extended from the first tape feeding roll portion 10a is adsorbed and fixed to the upper adsorption pads 21a, 21b and an end of the tape T is fixed by the first feeding standby tape fixing portion 31.

When it is detected or estimated that the wound tape T is exhausted by a detection sensor (not shown) while the tape T is being fed by the first tape feeding roll portion 10a, a tape replacement request signal is transmitted to a controller (not shown).

As shown in view (b) of FIG. 4, when the controller (not shown) detects the tape replacement request signal, the two adsorption pads 21a, 21b, which are spaced apart from each other by the predetermined gap on the upper portion, and the two adsorption pads 22a, 22b, which are spaced apart from each other by the predetermined gap on the lower portion, are moved down and are moved up, respectively, thereby bringing the tapes of the first tape feeding roll portion 10a and the second tape feeding roll portion 10b into contact with each other, and adsorbing and fixing the tapes, and, to prevent the tape T from being wrinkled, pull the tape at one end of the tape T. To pull the tape T at one end of the tape T, the first feeding standby tape fixing portion 31 is moved down and the second feeding standby tape fixing portion 32 is moved up, such that the first feeding standby tape fixing portion 31 and the second feeding standby tape fixing portion 32 come into contact with each other and one end of the tape T is pulled.

Next, as shown in view (c) of FIG. 4, the tape cutting cutter 25 advances with the tapes of the first and second tape feeding roll portions 10a, 10b being in contact with each other, and cuts the tape T. The tape does not almost sag after being cut since the cut tape T includes release paper and is thick.

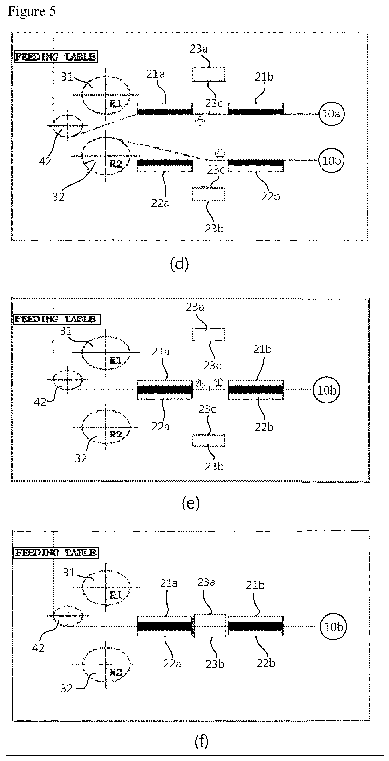

Next, as shown in view (d) of FIG. 5, after the tape is cut by the tape cutting cutter 25, the two adsorption pads on each of the upper and lower portions remain in a vacuum state and fix the tape, and the first feeding standby tape fixing portion 31 is moved up, such that the first feeding standby tape fixing portion 31 and the second feeding standby tape fixing portion 32 are spaced apart from each other. The adsorption pad 21b that is close to the tape feeding roll portion 10a out of the two upper adsorption pads 21a, 21b, and the adsorption pad 22a that is far from the tape feeding roll portion 10b out of the two lower adsorption pads 22a, 22b are released from the vacuum state, and a remaining tape of the tape feeding roll portion 10a which has fed the tape T is removed, and an operator removes a leftover tape fixed to the feeding standby tape fixing portion 32. Herein, the remaining tape refers to the tape T that remains on the tape feeding roll portion 10a and has a cut part, and the leftover tape refers to the tape T having a part cut at the feeding standby tape fixing portion 32.

Next, as shown in view (e) of FIG. 5, the two adsorption pads 21a, 21b, which are spaced apart from each other by the predetermined gap on the upper portion, and the two adsorption pads 22a, 22b, which are spaced apart from each other by the predetermined gap on the lower portion, are moved down and are moved up, respectively, thereby bringing the tapes of the first tape feeding roll portion 10a and the second tape feeding roll portion 10b into contact with each other, and adsorbing and fixing the tape T cut by the tape cutting cutter 25.

Next, as shown in view (f) of FIG. 5, one pair of upper and lower connection tape adsorption blocks 23a, 23b, which have the connection tape 23c adsorbed onto the surface thereof, are moved down and up, thereby bringing the connection tapes into contact with upper and lower surfaces of the cut part of the tape, and connecting the feeding roll portion tape wound around the other tape feeding roll portion and the connection feeding tape by the one pair of connection tapes.

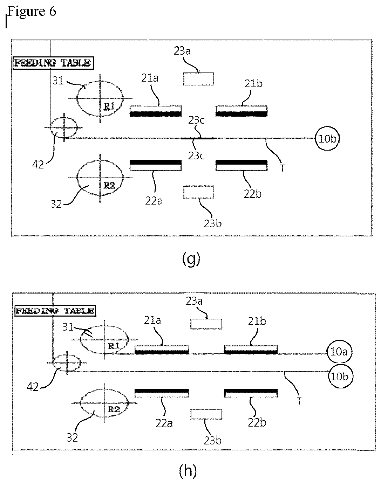

Next, as shown in view (g) of FIG. 6, the two upper adsorption pads 21a, 21b are moved up and the two lower adsorption pads 22a, 22b are moved down, and the upper connection tape adsorption block 23a is moved up and the lower connection tape adsorption block 23b is moved down, such that they are spaced apart from the tape T, and then, the tape T of the second tape feeding roll portion 10b is fed to the tape attachment device 50, which is a separate device, via the guide roller 42.

Next, as shown in view (h) of FIG. 6, the first tape feeding roll portion 10a in the tape feeding standby state has the extended tape T adsorbed and fixed to the upper adsorption pads 21a, 21b, and has the end of the tape T fixed by the first feeding standby tape fixing portion 31.

When the above-described process is repeated, the feeding roll portion tape T1 wound around the first tape feeding roll portion 10a and the second tape feeding roll portion 10b can automatically be replaced and the tape T can be continuously fed.

The present disclosure has been described for an insulation tape to be attached to an outside of a battery for an electric car, but is applicable to processes where a tape having release paper attached thereto is used.

### [Industrial Applicability]

The present disclosure relates to a tape continuous feeding apparatus and a tape continuous feeding method in a process of attaching an insulation tape (hereinafter, a "tape") to an outside of a battery for an electric car, which provide one pair of tape feeding roll portions including a first tape feeding roll portion and a second tape feeding roll portion having the tape wound therearound in a roll type, and automatically and continuously feed the tape wound around the one pair of tape feeding roll portions, and can be usefully used in the industry of manufacturing batteries for electric cars.

## Claims

1. A tape continuous feeding apparatus which is provided with one pair of tape feeding roll portions (10a, 10b) comprising a first tape feeding roll portion (10a) and a second tape feeding roll portion (10b) which are disposed one on the other and around which a tape (T) having release paper attached thereto is wound in a roll type, the apparatus continuously feeding a tape (T) by using a tape replacement portion, the tape replacement portion (20) automatically replacing a feeding roll portion tape (T1) wound around one of the first or second tape feeding roll portion (10a, 10b) with a feeding roll portion tape (T1) wound around the other tape feeding roll portion (10a, 10b) standing by to feed, before feeding of the tape (T) is completed and the tape is completely exhausted, **characterized in that**
the tape replacement portion (20) comprises: two adsorption pads (21a, 21b, 22a, 22b) which are spaced apart from each other by a predetermined gap on each of an upper portion and a lower portion to fix both sides of the tape (T) before or after the tape (T) is cut when the tape (T) is replaced; a tape cutting cutter (25) which advances in a direction orthogonal to a direction in which the adsorption pads (21a, 21b, 22a, 22b) are moved up and down to cut the tape (T) fixed by the two adsorption pads (21a, 21b, 22a, 22b) provided in each of the upper and lower portions, and cuts the tape (T); one pair of upper and lower connection tape adsorption blocks (23a, 23b) which are disposed between adsorption pads of the two adsorption pads (21a, 21b, 22a, 22b), and have a connection tape (23c) adsorbed onto a surface thereof to connect the tape (T); and a feeding standby tape fixing portion (31, 32) which fixes an end of the tape (T) of the tape feeding roll portion (10a, 10b) standing by to feed the tape (T) out of the first or second tape feeding roll portions (10a, 10b),
wherein the one pair of upper and lower connection tape adsorption blocks (23a, 23b) come into contact with cutting upper and lower surfaces of the feeding roll portion tape (T1) wound around the other tape feeding roll portion (10a, 10b), and of a connection feeding tape (T2), out of the tapes (T) cut by the tape cutting cutter (25), and the feeding roll portion tape (T1) wound around the other tape feeding roll portion (10a, 10b), and the connection feeding tape (T2) are connected to each other on their upper and lower surfaces by the connection tapes (23c), simultaneously, and the feeding roll portion tape (T1) wound around the other tape feeding roll portion (10a, 10b) is fed.

2. The apparatus of claim 1, wherein the one pair of tape feeding roll portions (10a, 10b) have the first tape feeding roll portion (10a) and the second tape feeding roll portion (10b) disposed one on the other with a same structure, and
wherein the tape feeding roll portion (10a, 10b) comprises:
a roll case (11) which has one pair of circular plates spaced apart from each other by a gap and forms a space in the gap to accommodate the tape (T);
a fixing spool (12) which is installed in a center of the roll case (11) to fix the case (11);
a tape tension maintaining servomotor (13) which is installed to maintain a tension of the tape (T); and
a tape position alignment servomotor (14) which is installed to align a position of the tape (T).

3. A tape continuous feeding method, which provides one pair of tape feeding roll portions (10a, 10b) comprising a first tape feeding roll portion (10a) and a second tape feeding roll portion (10b) which are disposed one on the other and around which a tape (T) having release paper attached thereto is wound in a roll type, the method continuously feeding a tape (T) by using a tape replacement portion (20), the tape replacement portion (20) automatically replacing a feeding roll portion tape (T1) wound around the first or second tape feeding roll portion (10a, 10b) with a feeding roll portion tape (T1) wound around the other tape feeding roll portion (10a, 10b) standing by to feed, before feeding of the tape (T1) is completed and the tape (T1) is completely exhausted,
the method comprising the steps of:
feeding the feeding roll portion tape (T1) by connecting any one of the first or second tape feeding roll portion (10a, 10b) to a connection feeding tape (23c), and making the other tape feeding roll portion (10a, 10b) be in a tape feeding standby state by fixing an end of the feeding roll portion tape (T1) of the other tape feeding roll portion (10a, 10b) by a feeding standby tape fixing portion (31, 32);
when it is estimated that the wound feeding roll portion tape (T1) is exhausted while the tape (T) is fed by the tape feeding roll portion (10a, 10b), transmitting a tape replacement request signal to a controller;
the method being **characterized by** further comprising the steps of adsorbing and fixing the tape (T) by bringing the feeding roll portion tape (T1) wound around the tape feeding roll portion (10a, 10b) the tape (T) of which is to be exhausted, and the feeding roll portion tape (T1) wound around the other tape feeding roll portion (10a, 10b) into contact with each other by moving down and moving up two adsorption pads (21a, 21b, 22a, 22b) which are spaced apart from each other by a predetermined gap on each of an upper portion and a lower portion;
cutting the tape (T) by making a tape cutting cutter (25) advance in a direction orthogonal to a direction in which the adsorption pads (21a, 21b, 22a, 22b) are moved up and down with the feeding roll portion tapes (T1) of the two tape feeding roll portions (10a, 10b) being in contact with each other;
bringing cut parts of the tapes (T) into contact with each other by moving down and moving up one pair of upper and lower connection tape adsorption blocks (23a, 23b), which have connection tapes (23c) adsorbed onto surfaces thereof to connect the tape (T), and connecting the feeding roll portion tape (T1) wound around the other tape feeding roll portion, and the connection feeding tape (T2) on both upper and lower surfaces, simultaneously, by the one pair of connection tapes (23c), the one pair of upper and lower connection tape adsorption blocks (23a, 23b) being disposed in the gap between the two adsorption pads (21a, 21b, 22a, 22b); and
feeding the tape (T) by the feeding roll portion tape (T1) wound around the other tape feeding roll portion (10a, 10b).

4. The method of claim 3, further comprising the steps of: after cutting by the cutting cutter (25),
fixing the tape (T) by maintaining the two adsorption pads (21a, 21b, 22a, 22b) on each of the upper and lower portions in a vacuum state, and then releasing the adsorption pad (21a, 21b) close to the tape feeding roll portion (10a, 10b) out of the two upper adsorption pads (21a, 21b), and the adsorption pad (22a, 22b) far from the tape feeding roll portion out of the two lower adsorption pads (22a, 22b) from the vacuum state, and removing a remaining tape (T) from the tape feeding roll portion (10a, 10b) which has fed the tape (T) and removing a leftover tape (T) fixed to the feeding standby tape fixing portion (31, 32);
maintaining the two adsorption pads (21a, 21b, 22a, 22b) on each of the upper and lower portions in the vacuum state, adsorbing and fixing the tape (T) by bringing the tapes (T) of the first and second tape feeding roll portions (10a, 10b) by moving down and moving up the two adsorption pads (21a, 21b, 22a, 22b) which are spaced apart from each other by a predetermined gap on the upper portion and the lower portion, and moving down a second feeding standby tape fixing portion (32) which fixes an end of the tape (T) of the other tape feeding roll portion (10a, 10b); and then
connecting the cut tapes (T).

5. The method of claim 3 or 4, comprising a step of, after releasing the two adsorption pads (21a, 21b, 22a, 22b) on each of the upper portion and the lower portion from the vacuum state and spacing the adsorption pads (21a, 21b, 22a, 22b) from the tape (T) by moving up and moving down, and spacing the one pair of upper and lower connection tape adsorption blocks (23a, 23b) from the tape (T) by moving up and moving down the connection tape adsorption blocks (23a, 23b),
feeding the tape (T) by the feeding roll portion tape (T1) wound around the other tape feeding roll portion (10a, 10b) which is standing by.

## Patentansprüche

1. Vorrichtung zur kontinuierlichen Bandzuführung, die mit einem Paar von Bandzuführrollteilen (10a, 10b) bereitgestellt wird, das einen ersten Bandzuführrollteil (10a) und einen zweiten Bandzuführrollteil (10b) umfasst, die übereinander angeordnet sind und um die ein Band (T) mit daran angebrachten Trennpapier in einer Rollenart gewickelt ist, wobei die Vorrichtung ein Band (T) durch Verwendung eines Bandaustauschteils kontinuierlich zuführt, wobei der Bandaustauschteil (20) ein Zuführrollteilband (T1), das um einen ersten oder zweiten Bandzuführrollteil (10a, 10b) gewickelt ist, durch ein Zuführrollteilband (T1) automatisch ersetzt, das um den anderen Bandzuführrollteil (10a, 10b) gewickelt ist, der zum Zuführen bereitsteht, bevor das Zuführen des Bandes (T) abgeschlossen ist und das Band vollständig verbraucht ist,
**dadurch gekennzeichnet, dass**
der Bandaustauschteil (20) umfasst:
zwei Adsorptionspolster (21a, 21b, 22a, 22b), die durch einen vorgegebenen Spalt jeweils an einem oberen Teil und einem unteren Teil voneinander beabstandet sind, um beide Seiten des Bandes (T) zu fixieren, bevor oder nachdem das Band (T) geschnitten wird, wenn das Band (T) ausgetauscht wird; ein Bandschneidemesser (25), das in eine Richtung orthogonal zu einer Richtung, in der die Adsorptionspolster (21a, 21b, 22a, 22b) auf und ab bewegt werden, vorrückt, um das Band (T) zu schneiden, das durch die zwei Adsorptionspolster (21a, 21b, 22a, 22b), die in jedem der oberen und unteren Teile bereitgestellt werden, fixiert ist, und das Band (T) schneidet; ein Paar von oberen und unteren Verbindungsband-Adsorptionsblöcken (23a, 23b), die zwischen Adsorptionspolstern der beiden Adsorptionspolster (21a, 21b, 22a, 22b) angeordnet sind und auf deren Oberfläche ein Verbindungsband (23c) adsorbiert wird, um das Band (T) zu verbinden; und ein Fixierteil zum Zuführen des Bereitschaftsbandes (31, 32), der ein Ende des Bandes (T) des Bandzuführrollteils (10a, 10b) fixiert, der bereitsteht, um das Band (T) aus dem ersten oder zweiten Bandzuführrollteil (10a, 10b) herauszuführen,
wobei das eine Paar von oberen und unteren Verbindungsband-Adsorptionsblöcken (23a, 23b) mit oberen und unteren Schneidflächen des Zuführrollteilbandes (T1), das um den anderen Bandzuführrollteil (10a, 10b) gewickelt ist, und eines Verbindungszuführbandes (T2) aus den Bändern (T) in Kontakt kommt, die von dem Bandschneidemesser (25) geschnitten wurden, und das um den anderen Bandzuführrollteil (10a, 10b) gewickelte Zuführrollteilband (T1) und das Verbindungszuführband (T2) an ihren oberen und unteren Oberflächen durch die Verbindungsbänder (23c) gleichzeitig miteinander verbunden werden und das um den anderen Bandzuführrollteil (10a, 10b) gewickelte Zuführrollteilband (T1) zugeführt wird.

2. Vorrichtung nach Anspruch 1, wobei bei dem einen Paar von Bandzuführrollteilen (10a, 10b) der erste Bandzuführrollteil (10a) und der zweite Bandzuführrollteil (10b) mit derselben Struktur übereinander angeordnet sind, und
wobei der Bandzuführrollteil (10a, 10b) umfasst:
ein Rollengehäuse (11), das ein Paar kreisförmiger Platten hat, die durch einen Spalt voneinander beabstandet sind und einen Raum in dem Spalt bilden, um das Band (T) aufzunehmen:
eine Fixierspule (12), die in einer Mitte des Rollengehäuses (11) installiert ist, um das Gehäuse (11) zu fixieren;
einen Bandspannungshaltungs-Servomotor (13), der installiert ist, um die Spannung des Bandes (T) zu halten; und
einen Bandpositionsausrichtungs-Servomotor (14), der installiert ist, um eine Position des Bandes (T) auszurichten.

3. Verfahren zur kontinuierlichen Bandzuführung, das ein Paar von Bandzuführrollteilen (10a, 10b) bereitstellt, einen ersten Bandzuführrollteil (10a) und einen zweiten Bandzuführrollteil (10b) umfassen, die übereinander angeordnet sind und um die ein Band (T) mit daran angebrachten Trennpapier in einer Rollenart gewickelt ist, wobei das Verfahren ein Band (T) durch Verwendung eines Bandaustauschteils kontinuierlich zuführt, wobei der Bandaustauschteil (20) ein Zuführrollteilband (T1), das um einen ersten oder zweiten Bandzuführrollteil (10a, 10b) gewickelt ist, durch ein Zuführrollteilband (T1) automatisch ersetzt, das um den anderen Bandzuführrollteil (10a, 10b) gewickelt ist, der zum Zuführen bereitsteht, bevor das Zuführen des Bandes (T) abgeschlossen ist und das Band vollständig verbraucht ist,
wobei das Verfahren die Schritte umfasst zum:
Zuführen des Zuführrollteilbandes (T1) des durch Verbinden des ersten oder zweiten Bandzuführrollteils (10a, 10b) mit einem Verbindungszuführband (23c) und Versetzen des anderen Bandzuführrollteils (10a, 10b) in einen Bandzuführbereitschaftszustand durch Fixieren eines Endes des Zuführrollteilbandes (T1) des anderen Bandzuführrollteils (10a, 10b) durch ein Zuführbereitschaftsband-Fixierteil (31, 32);
wenn eingeschätzt wird, dass das gewickelte Zuführrollteilband (T1) verbraucht ist, während das Band (T) durch den Bandzuführrollteil (10a, 10b) zugeführt wird, Senden eines Bandaustausch-Anforderungssignals an eine Steuerung;
wobei das Verfahren **dadurch gekennzeichnet ist, dass** es des Weiteren die Schritte umfasst zum
Adsorbieren und Fixieren des Bandes (T), indem das Zuführrollteilband (T1), das um den Bandzuführrollteil (10a, 10b) gewickelt wird, dessen Band (T) zu verbrauchen ist, und das Zuführrollteilband (T1), das um den anderen Bandzuführrollteil (10a, 10b) gewickelt ist, miteinander in Kontakt gebracht werden, indem zwei Adsorptionspolster (21a, 21b, 22a, 22b), die durch einen vorgegebenen Spalt an jeweils einem oberen Teil und einem unteren Teil voneinander beabstandet sind, nach unten bewegt und nach oben bewegt werden;
Schneiden des Bandes (T), indem ein Bandschneidemesser (25) in einer Richtung orthogonal zu einer Richtung vorwärts bewegt wird, in der die Adsorptionspolster (21a, 21b, 22a, 22b) nach oben und unten bewegt werden, wobei die Zuführrollteilbänder (T1) der beiden Bandzuführrollteile (10a, 10b) miteinander in Kontakt sind;
In-Kontakt-Bringen von geschnittenen Teilen der Bänder (T) miteinander, indem ein Paar von oberen und unteren Verbindungsband-Adsorptionsblöcken (23a, 23b) abwärts und aufwärts bewegt werden, auf deren Oberflächen Verbindungsbänder (23c) adsorbiert sind, um das Band (T) zu verbinden (T), und Verbinden des Zuführrollteilbandes (T1), das um den anderen Bandzuführrollteil gewickelt ist, und des Verbindungszuführbandes (T2) sowohl auf der oberen als auch auf der unteren Oberfläche gleichzeitig durch das eine Paar von Verbindungsbändern (23c), wobei das eine Paar von oberen und unteren Verbindungsband-Adsorptionsblöcken (23a, 23b) in dem Spalt zwischen den beiden Adsorptionspolstern (21a, 21b, 22a, 22b) angeordnet ist; und
Zuführen des Bandes (T) durch das Zuführrollteilband (T1), das um den anderen Bandzuführrollteil (10a, 10b) gewickelt ist.

4. Verfahren nach Anspruch 3, das des Weiteren die Schritte umfasst zum: nach dem Schneiden durch die Schneidvorrichtung (25)
Fixieren des Bandes (T), indem die beiden Adsorptionspolster (21a, 21b, 22a, 22b) an jeweils dem oberen und unteren Teil in einem Unterdruckzustand gehalten werden und dann das Adsorptionspolster (21a, 21b) nahe dem Bandzuführrollteil (10a, 10b) aus den beiden oberen Adsorptionspolstern (21a, 21b) und das Adsorptionspolster (22a, 22b) fern von dem Bandzuführrollteil aus den beiden unteren Adsorptionspolstern (22a, 22b) aus dem Unterdruckzustand freigegeben werden, und Entfernen eines restlichen Bandes (T) von dem Bandzuführrollteil (10a, 10b), der das Band (T) zugeführt hat, und Entfernen eines übrig gebliebenen Bandes (T), das an dem Zuführbereitschaftsband-Befestigungsteil (31, 32) fixiert ist;
Halten der beiden Adsorptionspolster (21a, 21b, 22a, 22b) an jeweils dem oberen und unteren Teil im Unterdruckzustand, Adsorbieren und Fixieren des Bandes (T) durch Bringen der Bänder (T) der ersten und zweiten Bandzuführrollteile (10a, 10b), durch Abwärts- und Aufwärtsbewegen der beiden Adsorptionspolster (21a, 21b, 22a, 22b), die voneinander durch einen vorgegebenen Spalt auf dem oberen Teil und dem unteren Teil beabstandet sind, und Abwärtsbewegen eines zweiten Zuführbereitschaftsband-Fixiertteils (32), der ein Ende des Bandes (T) des anderen Bandzuführrollteils (10a, 10b) fixiert; und dann
Verbinden der geschnittenen Bänder (T).

5. Verfahren nach Anspruch 3 oder 4, das einen Schritt umfasst, nach dem Freigeben der beiden Adsorptionspolster (21a, 21b, 22a, 22b) an jeweils dem oberen Teil und dem unteren Teil aus dem Unterdruckzustand und dem Beabstanden der Adsorptionspolster (21a, 21b, 22a, 22b) von dem Band (T) durch Aufwärts- und Abwärtsbewegen und Beabstanden des einen Paares von oberen und unteren Verbindungsband-Adsorptionsblöcken (23a, 23b) von dem Band (T) durch Aufwärts- und Abwärtsbewegen der Verbindungsband-Adsorptionsblöcke (23a, 23b), zum
Zuführen des Bandes (T) durch das Zuführrollteilband (T1), das um den anderen Bandzuführrollteil (10a, 10b) gewickelt ist, der bereitsteht.

## Revendications

1. Appareil d'alimentation en bande continue qui est doté d'une paire de parties de rouleau d'alimentation en bande (10a, 10b) comprenant une première partie de rouleau d'alimentation en bande (10a) et une deuxième partie de rouleau d'alimentation en bande (10b) qui sont disposées l'une sur l'autre et autour desquelles une bande (T) présentant un papier de libération rattaché à celle-ci est enroulée dans un type de rouleau, l'appareil fournissant en continu une bande (T) en utilisant une partie de remplacement de bande, la partie de remplacement de bande (20) remplaçant automatiquement une bande de partie de rouleau d'alimentation (T1) enroulée autour d'une de la première ou la deuxième partie de rouleau d'alimentation en bande (10a, 10b) par une bande de partie de rouleau d'alimentation (T1) enroulée autour de l'autre partie de rouleau d'alimentation en bande (10a, 10b) en attente pour alimenter, avant qu'une fourniture de la bande (T) soit terminée et que la bande soit totalement épuisée,
**caractérisé en ce que**
la partie de remplacement de bande (20) comprend : deux blocs d'adsorption (21a, 21b, 22a, 22b) qui sont espacés l'un de l'autre par un écart prédéterminé sur chacune d'une partie supérieure et d'une partie inférieure pour fixer les deux côtés de la bande (T) avant ou après la coupure de la bande (T) lorsque la bande (T) est remplacée ; un couteau de coupe de bande (25) qui avance dans une direction orthogonale à une direction dans laquelle les blocs d'adsorption (21a, 21b, 22a, 22b) sont déplacés vers le haut et le bas pour couper la bande (T) fixée par les deux blocs d'adsorption (21a, 21b, 22a, 22b) disposés dans chacune des parties supérieure et inférieure, et coupe la bande (T) ; une paire de blocs d'adsorption de bande de connexion supérieur et inférieur (23a, 23b) qui sont disposés entre des blocs d'adsorption des deux blocs d'adsorption (21a, 21b, 22a, 22b), et présentent une bande (23c) absorbée sur une surface de ceux-ci pour connecter la bande (T) ; et une partie de fixation de bande en attente d'alimentation (31, 32) qui fixe une extrémité de la bande (T) de la partie de rouleau d'alimentation en bande (10a, 10b) en attente de fourniture de la bande (T) hors de la première ou deuxième partie de rouleau d'alimentation en bande (10a, 10b),
dans lequel l'une paire de blocs d'adsorption de bande de connexion supérieur et inférieur ((23a, 23b) entrent en contact avec des surfaces supérieure et inférieure de coupe de la bande de partie de rouleau d'alimentation (T1) enroulée autour de l'autre partie de rouleau d'alimentation en bande (10a, 10b), et d'une bande d'alimentation de connexion (T2), hors des bandes (T) coupées par le couteau de coupe de bande (25), et la bande de partie de rouleau d'alimentation (T1) enroulée autour de l'autre partie de rouleau d'alimentation en bande (10a, 10b), et la bande d'alimentation de connexion (T2) sont connectées l'une à l'autre sur leurs surfaces supérieure et inférieure par les bandes de connexion (23c), simultanément, et la bande de partie de rouleau d'alimentation (T1) enroulée autour de l'autre partie de rouleau d'alimentation en bande (10a, 10b) est fournie.

2. L'appareil de la revendication 1, dans lequel l'une paire de parties de rouleau d'alimentation en bande (10a, 10b) présentent la première partie de rouleau d'alimentation en bande (10a) et la deuxième partie de rouleau d'alimentation en bande (10b) disposées l'une sur l'autre avec une même structure, et
dans lequel la partir de rouleau d'alimentation en bande (10a, 10b) comprend :
un boîtier de rouleau (11) qui présente une paire de plaques circulaires espacées l'une de l'autre par un écart et constitue un espace dans l'écart pour accueillir la bande (T) ;
une bobine de fixation (12) qui est installée dans un centre du boîtier de rouleau (11) pour fixer le boîtier (11) ;
un servomoteur de maintien de tension de bande (13) qui est installé pour maintenir une tension de la bande (T) ; et
un servomoteur d'alignement de position de bande (14) qui est installé pour aligner une position de la bande (T) .

3. Procédé d'alimentation en bande continue, qui fournit une paire de parties de rouleau d'alimentation en bande (10a, 10b) comprenant une première partie de rouleau d'alimentation en bande (10a) et une deuxième partie de rouleau d'alimentation en bande (10b) qui sont disposées l'une sur l'autre et autour desquelles une bande (T) présentant un papier de libération rattaché à celle-ci est enroulée dans un type de rouleau, le procédé fournissant en continu une bande (T) en utilisant une partie de remplacement de bande (20), la partie de remplacement de bande (20) remplaçant automatiquement une bande de partie de rouleau d'alimentation (T1) enroulée autour de la première ou la deuxième partie de rouleau d'alimentation en bande (10a, 10b) par une bande de partie de rouleau d'alimentation (T1) enroulée autour de l'autre partie de rouleau d'alimentation en bande (10a, 10b) en attente pour alimenter, avant qu'une fourniture de la bande (T) soit terminée et que la bande (T1) soit totalement épuisée,
le procédé comprenant les étapes de :
fourniture de la bande de partie de rouleau d'alimentation (T1) en connectant l'une quelconque de la première ou deuxième partie de rouleau d'alimentation en bande (10a, 10b) à une bande d'alimentation de connexion (23c), et en faisant de l'autre partie de rouleau d'alimentation en bande (10a, 10b) celle placée dans un état d'attente d'alimentation en bande en fixant une extrémité de la bande de partie de rouleau d'alimentation (T1) de l'autre partie de rouleau d'alimentation en bande (10a, 10b) par une partie de fixation de bande en attente d'alimentation (31, 32) ;
lorsqu'il est estimé que la bande de partie de rouleau d'alimentation enroulée (T1) est épuisée tandis que la bande (T) est fournie par la partie de rouleau d'alimentation en bande (10a, 10b), transmission d'un signal de demande de remplacement de bande à un contrôleur ;
le procédé étant **caractérisé par** ce qu'il comprend en outre les étapes d'adsorption et de fixation de la bande (T) en amenant en contact l'une avec l'autre la bande de partie de rouleau d'alimentation (T1) enroulée autour de la partie de rouleau d'alimentation en bande (10a, 10b) dont la bande (T) va être épuisée, et la bande de partie de rouleau d'alimentation (T1) enroulée autour de la partie de rouleau d'alimentation en bande (10a, 10b) en déplaçant vers le bas et déplaçant vers le haut deux blocs d'adsorption (21a, 21b, 22a, 22b) qui sont espacés l'un de l'autre par un écart prédéterminé sur chacune d'une partie supérieure et d'une partie inférieure ;
coupe de la bande (T) en faisant avancer un couteau de coupe de bande (25) dans une direction orthogonale à une direction dans laquelle les blocs d'adsorption (21a, 21b, 22a, 22b) sont déplacés vers le haut et le bas avec les bandes de partie de rouleau d'alimentation (T1) des deux parties de rouleau d'alimentation en bande (10a, 10b) en contact l'une avec l'autre ;
mise en contact des parties coupées des bandes (T) l'une avec l'autre en déplaçant vers le bas et déplaçant vers le haut une paire de blocs d'adsorption de bande de connexion supérieur et inférieur (23a, 23b), qui présentent des bandes de connexion (23c) adsorbées sur des surfaces de ceux-ci pour connecter la bande (T), et connexion de la bande de partie de rouleau d'alimentation (T1) enroulée autour de l'autre partie de rouleau d'alimentation en bande, et de la bande d'alimentation de connexion (T2) sur à la fois les surfaces supérieure et inférieure, simultanément, par l'une paire de bandes de connexion (23c), l'une paire de blocs d'adsorption de bande de connexion supérieur et inférieur (23a, 23b) étant disposés dans l'écart entre les deux blocs d'adsorption (21a, 21b, 22a, 22b) ; et
fourniture de la bande (T) par la bande de partie de rouleau d'alimentation (T1) enroulée autour de l'autre partie de rouleau d'alimentation en bande (10a, 10b).

4. Le procédé de la revendication 3, comprenant en outre les étapes de : après une coupe par le couteau de coupe (25),
fixation de la bande (T) en maintenant les deux blocs d'adsorption (21a, 21b, 22a, 22b) sur chacune des parties supérieure et inférieure dans un état de vide, et puis libération du bloc d'adsorption (21a, 21b) proche de la partie de rouleau d'alimentation en bande (10a, 10b) des deux blocs d'adsorption supérieurs (21a, 21b), et du bloc d'adsorption (22a, 22b) éloigné de la partie de rouleau d'alimentation en bande des deux blocs d'adsorption inférieurs (22a, 22b) de l'état de vide, et retrait d'une bande restante (T) de la partie de rouleau d'alimentation en bande (10a, 10b) qui a fourni la bande (T) et retrait d'une bande restante (T) fixée à la partie de fixation de bande en attente d'alimentation (31, 32) ;
maintien des blocs d'adsorption (21a, 21b, 22a, 22b) sur chacune des parties supérieure et inférieure dans l'état de vide, adsorption et fixation de la bande (T) en amenant les bandes (T) des première et deuxième parties de rouleau d'alimentation en bande (10a, 10b) par déplacement vers le bas et déplacement vers le haut des deux blocs d'adsorption (21a, 21b, 22a, 22b) qui sont espacés l'un de l'autre par un écart prédéterminé sur la partie supérieure et la partie inférieure, et déplacement vers le bas d'une deuxième partie de fixation de bande mise en attente d'alimentation (32) qui fixe une extrémité de la bande (T) de l'autre partie de rouleau d'alimentation en bande (10a, 10b) ; et puis
connexion des bandes coupées (T).

5. Le procédé de la revendication 3 ou 4, comprenant une étape de, après libération des deux blocs d'adsorption (21a, 21b, 22a, 22b) sur chacune de la partie supérieure et la partie inférieure de l'état de vide et espacement des blocs d'adsorption (21a, 21b, 22a, 22b) d'avec la bande (T) par déplacement vers le haut et déplacement vers le bas, et espacement de l'une paire de blocs d'adsorption de bande de connexion supérieur et inférieur (23a, 23b) d'avec la bande (T) par déplacement vers le haut et déplacement vers le bas des blocs d'adsorption de bande de connexion (23a, 23b),
fourniture de la bande (T) par la bande de partie de rouleau d'alimentation (T1) enroulée autour de l'autre partie de rouleau d'alimentation en bande (10a, 10b) qui est en attente.
